# EUROPÄISCHE PATENTANMELDUNG

(11) **EP 4 813 673 A1**
(43) Veröffentlichungstag der Anmeldung: **30.09.2026**
(21) Anmeldenummer: 26166203.5
(22) Anmeldetag: 19.03.2026
(51) Int. Cl.: B60C 11/13, B60C 11/11, B60C 11/03

(54) **FAHRZEUGREIFEN**

(30) Priorität: 25.03.2025 DE 102025111443
(71) Anmelder: Continental Reifen Deutschland GmbH, 30175 Hannover (DE)
(72) Erfinder: Herbst, Stephan, 30175 Hannover (DE); Behr, Ulrich, 30175 Hannover (DE); Javagal Suresh, Swaroop Sharma, 30175 Hannover (DE)
(74) Vertreter: Continental Corporation

(57) **Zusammenfassung**

Die Erfindung betrifft einen Fahrzeugreifen mit einem Lauftreifen mit einer zentralen Profilblockreihe (1), zwei halbmittigen Profilblockreihen (2) und zwei schulterseitigen Profilblockreihen (3), wobei aufeinanderfolgende, zentrale Profilblöcke (6) und aufeinanderfolgende, halbmittige Profilblöcke (11) jeweils durch eine Grundanhebung (9, 10) miteinander verbunden sind und wobei jedem halbmittigen Profilblock (11) zwei schulterseitige Profilblöcke (14) der benachbarten schulterseitigen Profilblockreihe (3) zugeordnet sind.

Jedem halbmittigen Profilblock (11) aus der einen halbmittigen Profilblockreihe (2) sind gemeinsam mit einem halbmittigen Profilblock (11) aus der jeweils anderen halbmittigen Profilblockreihe (2) in axialer Richtung zwei zentrale Profilblöcke (6) zugeordnet,
wobei die halbmittigen Profilblöcke (11) jeweils über zwei Grundanhebungen (17) mit den zugeordneten, schulterseitigen Profilblöcken (14) verbunden sind und wobei aufeinanderfolgende, schulterseitige Profilblöcke (14) mit je einer Grundanhebung (13) verbunden sind,
wobei sämtliche Grundanhebungen (9, 10, 13, 17) an ihrer gegenüber dem Niveau der Profiltiefe (T_{P}) in radialer Richtung ermittelten höchsten Stelle eine Höhe von zumindest 2,5 mm aufweisen.

## Beschreibung

Die Erfindung betrifft einen Fahrzeugreifen mit einem Lauftreifen mit genau fünf, von auf Profiltiefe ausgeführten mittleren und schulterseitigen Umfangsrillen voneinander getrennten Profilblockreihen, zu welchen eine von der Reifenäquatorialebene geschnittene, zentrale Profilblockreihe, zwei halbmittige Profilblockreihen und zwei schulterseitige Profilblockreihe gehören, wobei die Profilblockreihen durch Querrillen voneinander getrennte, in Umfangsrichtung aufeinanderfolgende, zentrale Profilblöcke, halbmittige Profilblöcke und schulterseitige Profilblöcke aufweisen und wobei die in Umfangsrichtung aufeinanderfolgenden, zentralen Profilblöcke und die in Umfangsrichtung aufeinanderfolgenden, halbmittigen Profilblöcke jeweils durch eine in der jeweiligen Querrille ausgebildete, dieser eine lokale Rillenverengung verleihende Grundanhebung miteinander verbunden sind und wobei jedem halbmittigen Profilblock in axialer Richtung zwei schulterseitige Profilblöcke der benachbarten schulterseitigen Profilblockreihe zugeordnet sind.

Ein derartiger Fahrzeugreifen, welcher insbesondere ein All-Terrain- oder Offroad-Reifen ist, ist beispielsweise aus der DE 10 2016 215 448 A1 bekannt. Dieser Fahrzeugreifen weist beim beschriebenen Ausführungsbeispiel einen Laufstreifen mit genau fünf durch Umfangsrillen voneinander getrennten Profilblockreihen mit durch Querrillen voneinander getrennten Profilblöcken auf. Die Profilblöcke der zentralen Profilblockreihe und der halbmittigen Profilblockreihe sind in Draufsicht jeweils S-förmig ausgeführt und dementsprechend mit zwei je von den Umfangsrillen ausgehenden Sacknuten versehen. In den Querrillen und Sacknuten ist jeweils eine Grundanhebung ausgebildet, wobei die in den Querrillen ausgebildeten Grundanhebungen die Profilblöcke innerhalb der jeweiligen Profilblockreihe miteinander verbinden. Jedem halbmittigen Profilblock ist ein mittiger Profilblock und sind zwei schulterseitige Profilblöcke zugeordnet. Die Grundanhebungen weisen jeweils zumindest zwei Stufen unterschiedlicher Höhe auf. Die niedrigste(n) Stufe(n) sind bei den Einmündungsbereichen der Querrillen bzw. bei dem Einmündungsbereich der Sacknuten ausgebildet. Dieser Fahrzeugreifen soll gute Fahreigenschaften auf befestigtem, insbesondere trockenem Untergrund aufweisen, wobei ferner gute Traktionseigenschaften auf unbefestigtem, insbesondere matschigem Untergrund erhalten bleiben sollen.

Bei Fahrzeugreifen der eingangs genannten Art sorgen die die zentralen bzw. halbmittigen Profilblöcke innerhalb der jeweiligen Profilbockreihe aneinander anbindenden Grundanhebungen für eine rippenartige Struktur der Profilbockreihe, welche die Steifigkeit der Profilblockreihe, insbesondere die Umfangssteifigkeit, erhöht und somit für die Handlingperformance des Fahrzeugreifens, beispielsweise für die Kraftübertragung auf den Untergrund und das Ansprechverhalten auf Lenkkräfte, günstig ist. Zusätzlich stellen die Grundanhebungen die Schnee- und Matschtraktion verbessernde Griffkanten zur Verfügung. Derartige Fahrzeugreifen sind auch als "All-Terrain-Reifen" bekannt, welche insbesondere bei SUVs zum Einsatz kommen.

Der Erfindung liegt die Aufgabe zugrunde, bei einem Fahrzeugreifen der eingangs genannten Art die All-Terrain-Eignung weiter zu verbessern und daher dessen Laufstreifenprofil vorrangig im Hinblick die Traktionsperformance auf weichen Untergründen und die Handlingperformance bei festen Untergründen auf günstigere Weise als bisher auszubalancieren.

Gelöst wird die gestellte Aufgabe erfindungsgemäß dadurch, dass jedem halbmittigen Profilblock aus der einen halbmittigen Profilblockreihe gemeinsam mit einem halbmittigen Profilblock aus der jeweils anderen halbmittigen Profilblockreihe in axialer Richtung zwei zentrale Profilblöcke zugeordnet sind, wobei die halbmittigen Profilblöcke jeweils über zwei in der angrenzenden, schulterseitigen Umfangsrille befindliche, dieser lokale Rillenverengungen verleihenden Grundanhebungen mit den in axialer Richtung zugeordneten, schulterseitigen Profilblöcken verbunden sind und wobei einander in Umfangsrichtung aufeinanderfolgende, schulterseitige Profilblöcke mit je einer in der diese trennenden Querrille eine lokale Rillenverengung verleihenden Grundanhebung verbunden sind, wobei sämtliche lokale Grundanhebungen an ihrer gegenüber dem Niveau der Profiltiefe in radialer Richtung ermittelten höchsten Stelle eine Höhe von zumindest 2,5 mm aufweisen.

Durch die Vielzahl zentraler Profilblöcke ist eine hohe Anzahl an Blockkanten und sich bedient durch die Grundanhebungen auf schnelle Weise mit dem jeweiligen Untergrundmaterial füllenden Querrillen im zentralen Laufstreifenbereich zur Verfügung gestellt, sodass die zentrale Profilblockreihe beim Fahren auf weichen Untergründen die Traktionsperformance verbessert. Durch die zweifache Anbindung der halbmittigen Profilblöcke an die schulterseitigen Profilblöcke sind durch die verstärkte in axialer Richtung wirkende gegenseitige Stabilisierung besonders steife, sich auch in den Reifenschulterbereich ersteckende Makroblockstrukturen geschaffen, welche für die Handlingperformance günstig sind. Das Laufstreifprofil ist somit zwischen der Traktionsperformance auf weichen Untergründen und der Handlingperformance auf festen Untergründen besser als bisher ausbalanciert, sodass folglich die All-Terrain-Eignung gegenüber bekannten Fahrzeugreifen weiter verbessert ist.

Gemäß einer bevorzugten Ausführung sind die mittleren Umfangsrillen frei von lokalen Grundanhebungen, welche zentrale Profilblöcke an halbmittige Profilblöcke anbinden. Solche mittleren Umfangsrillen sind für das Entwässerungsverhalten des Laufstreifenprofils günstig, sodass - in Kombination mit den erwähnten, in die Reifenschulterbereiche reichenden Makroblockstrukturen - eine besonders vorteilhafte Balance zwischen der Handlingperformance auf festen Untergründen und der Handlingperformance auf nasser Fahrbahn erzielt wird.

Gemäß einer weiteren bevorzugten Ausführung ist vorgesehen, dass die halbmittigen Profilblöcke, in Draufsicht betrachtet, in Umfangsrichtung langgestreckt sind und eine an der Laufstreifenperipherie ermittelte, in die Umfangsrichtung projizierte Länge aufweisen, welche zwischen zwei Begrenzungslinien ermittelt ist, die in axialer Richtung durch die in Umfangsrichtung am weitesten voneinander beabstandeten Stellen des jeweiligen halbmittigen Profilblocks an der Laufstreifenperipherie verlaufen, und welche 70,0 mm bis 110,0 mm, insbesondere 75,0 mm bis 105,0 mm, beträgt. Solche halbmittigen Profilblöcke tragen zu einer hohen Steifigkeit des Laufstreifenprofils und derart zu einer guten Handlingperformance auf trockenem Untergrund bei.

Gemäß einer weiteren bevorzugten Ausführung sind die Querrillen in der zentralen Profilblockreihe - bezogen auf in Draufsicht gerade verlaufende, die Enden der jeweiligen Rillenmittellinie verbindende Hilfslinien - zur Umfangsrichtung geneigte, erste Querrillen und gegenüber diesen stärker zur Umfangsrichtung geneigte, zweite Querrillen, wobei in Umfangsrichtung abwechselnd eine der ersten Querrillen auf eine der zweiten Querrillen folgt, wobei die zentralen Profilblöcke, in Draufsicht betrachtet, jeweils eine L-förmige Gestalt aufweisen und durch die Reifenäquatorialebene in einen in der einen Laufstreifenhälfte liegenden, in Umfangsrichtung langestreckten, großvolumigen Blockabschnitt und einen in der anderen Laufstreifenhälfte liegenden, kleinvolumigen Blockabschnitt mit einem gegenüber dem großvolumigen Blockabschnitt kleineren Gummivolumen geteilt sind, wobei in Umfangsrichtung aufeinanderfolgende zentrale Profilblöcke in Draufsicht derart bezüglich ihrer L-Form um 180° verdreht zueinander orientiert sind, dass die großvolumigen Blockabschnitte bezüglich der axialen Richtung überlappen. In Folge der L-Form füllen sich die ersten Querrillen beim Fahren auf weichen Untergründen auf besonders wirksame Weise mit dem jeweiligen Untergrundmaterial, sodass über den Effekt der Material-Material-Reibung die Traktionsperformance auf weichen Untergründen weiter verbessert ist.

Nachfolgend wird auf eine bevorzugte Ausgestaltung und zugehörige, miteinander kombinierbare, vorteilhafte Weiterbildungen der ersten Querrillen eingegangen.

Gemäß einer vorteilhaften Ausgestaltung ist vorgesehen, dass die ersten Querrillen in der zentralen Profilblockreihe, in Draufsicht betrachtet, langgestreckt Z-förmig verlaufen, eine Rillenmittelline mit zwei Knickpunkten aufweisen und sich aus einem gerade verlaufenden, mittleren Rillenabschnitt und zwei randseitigen Rillenabschnitten zusammensetzen, wobei der mittlere Rillenabschnitt - bezogen auf die Rillenmittellinie - zur Umfangsrichtung unter einem Winkel von bis zu 5°, insbesondere 0°, verläuft und mit jedem randseitigen Rillenabschnitt - bezogen auf die Rillenmittellinie - je einen Winkel von 115° bis 140° einschließt, wobei die komplette Grundanhebung - bezüglich der Rillenmittellinie - im mittleren Rillenabschnitt ausgebildet ist. Die im mittleren Rillenabschnitt ausgebildete Grundanhebung ist für die gegenseitige Stabilisierung der zentralen Profilblöcke und damit für die Handlingperformance, vor allem bei in axialer Richtung wirkenden Kräften, beispielsweise beim Fahren von Kurven mit entsprechend hoher Geschwindigkeit, besonders vorteilhaft, sodass die All-Terrain-Eignung des Reifens weiter verbessert ist.

Gemäß einer ersten vorteilhaften Weiterbildung der letztgenannten Ausgestaltung ist vorgesehen, dass der mittlere Rillenabschnitt, in Draufsicht betrachtet, in Umfangsrichtung sowie im Bereich der Reifenäquatorialebene verläuft. Dies ist insbesondere für die Entwässerung des Laufstreifenprofils beim Fahren auf asphaltierten Straßen günstig.

Eine zweite vorteilhafte Weiterbildung der letztgenannten Ausgestaltung sieht vor, dass der mittlere Rillenabschnitt an der Laufstreifenperipherie eine in Draufsicht senkrecht zur Rillenmittellinie ermittelte, konstante Breite von 4,0 mm bis 7,0 mm sowie ferner eine auf die Knickpunkte der Rillenmittellinie bezogene, in die Umfangsrichtung projizierte Länge von 250% bis 650%, insbesondere von 350% bis 550%,seiner Breite aufweist. Diese Maßnahme ist ebenfalls für die Entwässerung günstig.

Gemäß einer dritten vorteilhaften Weiterbildung der letztgenannten Ausgestaltung weisen die randseitigen Rillenabschnitte eine in Draufsicht senkrecht zur Rillenmittellinie ermittelte Breite auf, welche ausgehend vom mittleren Rillenabschnitt zu den mittleren Umfangsrillen fortlaufend und stetig, insbesondere auf lineare Weise, zunimmt. Dies trägt ebenfalls zu einer weiteren Verbesserung der Entwässerung bei.

Gemäß einer vierten vorteilhaften Weiterbildung der letztgenannten Ausgestaltung sind die Grundanhebungen, welche im mittleren Rillenabschnitt der ersten Querrillen ausgebildet sind, jeweils aus einer die zentralen Profilblöcke aneinander anbindenden Anhebungsbasis und zwei auf dieser befindlichen Anhebungsvorsprüngen gebildet, wobei der eine Anhebungsvorsprung von dem einen zentralen Profilblock und der andere Anhebungsvorsprung von dem anderen zentralen Profilblock vorspringt, wobei die Anhebungsvorsprünge, in Draufsicht betrachtet, bezüglich jener Richtung, welche senkrecht zur Rillenmittellinie im Bereich des mittleren Rillenabschnitts verläuft, überlappungsfrei ausgebildet sind. Dies trägt zu einer zusätzlichen gegenseitigen Stabilisierung und Versteifung der zentralen Profilblöcke bei, wodurch die Handlingperformance auf festen Untergründen weiter verbessert ist.

Nachfolgend wird auf eine bevorzugte Ausgestaltung und zugehörige, miteinander kombinierbare, vorteilhafte Weiterbildungen der zweiten Querrillen eingegangen.

Gemäß der bevorzugten Ausgestaltung ist vorgesehen, dass die zweiten Querrillen in der zentralen Profilblockreihe, in Draufsicht betrachtet, langgestreckt Z-förmig verlaufen, eine Rillenmittelline mit zwei Knickpunkten aufweisen und sich aus einem gerade verlaufenden, mittleren Rillenabschnitt und zwei randseitigen Rillenabschnitten zusammensetzen, wobei der mittlere Rillenabschnitt - bezogen auf die Rillenmittellinie - zur axialen Richtung unter einem Winkel von 20° bis 30° verläuft und mit jedem randseitigen Rillenabschnitt - bezogen auf die Rillenmittellinie - je einen Winkel von 120° bis 145° einschließt, wobei die komplette Grundanhebung - bezüglich der Rillenmittellinie - im mittleren Rillenabschnitt ausgebildet ist. Die im mittleren Rillenabschnitt ausgebildete Grundanhebung ist für die gegenseitige Stabilisierung der zentralen Profilblöcke und damit für die Handlingperformance, vor allem bei in Umfangrichtung wirkenden Kräften, beispielsweise beim Bremsen und Beschleunigen, besonders vorteilhaft, sodass die All-Terrain-Eignung des Reifens weiter verbessert ist.

Gemäß einer ersten vorteilhaften Weiterbildung der letztgenannten Ausgestaltung kreuzt der mittlere Rillenabschnitt, in Draufsicht betrachtet, die Reifenäquatorialebene.

Gemäß einer zweiten vorteilhaften Weiterbildung ist vorgesehen, dass die zweiten Querrillen an der Laufstreifenperipherie eine in Draufsicht senkrecht zur Rillenmittellinie ermittelte, konstante Breite von 3,0 mm bis 6,0 mm und der mittlere Rillenabschnitt eine auf die Knickpunkte der Rillenmittellinie bezogene, in die axiale Richtung projizierte Länge von 300% bis 700%, insbesondere von 450% bis 600%, der Breite der jeweiligen Querrille aufweist. Diese Maßnahme ist ebenfalls für die Entwässerung günstig.

Gemäß einer dritten vorteilhaften Weiterbildung ist vorgesehen, dass die Grundanhebungen, welche im mittleren Rillenabschnitt der zweiten Querrillen ausgebildet sind, jeweils aus einer die zentralen Profilblöcke aneinander anbindenden Anhebungsbasis und zwei auf dieser befindlichen Anhebungsvorsprüngen gebildet sind, wobei der eine Anhebungsvorsprung von dem einen zentralen Profilblock und der andere Anhebungsvorsprung von dem anderen zentralen Profilblock vorspringt, wobei die Anhebungsvorsprünge, in Draufsicht betrachtet, bezüglich jener Richtung, welche senkrecht zur Rillenmittellinie im Bereich des mittleren Rillenabschnitts verläuft, überlappungsfrei ausgebildet sind. Auch dies trägt zu einer zusätzlichen gegenseitigen Stabilisierung und Versteifung der zentralen Profilblöcke bei, wodurch die Handlingperformance auf festen Untergründen weiter verbessert ist.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht auf einen vereinfachten Umfangsabschnitt eines in die Ebene abgewickelten Laufstreifens eines Fahrzeugreifens mit einer Ausführungsvariante der Erfindung,
Fig. 2 eine vergrößerte Draufsicht auf das Detail Z₂ der Fig. 1,
Fig. 3 einen Schnitt entlang der Linie III-III der Fig. 2,
Fig. 4 einen Schnitt entlang der Linie IV-IV der Fig. 2,
Fig. 5 eine Schrägansicht gemäß der in Fig. 2 durch den Pfeil S₅ angedeuteten Sichtrichtung,
Fig. 6 eine vergrößerte Draufsicht auf das Detail Z₆ der Fig. 1,
Fig. 7 einen Schnitt entlang der Linie VII-VII der Fig. 6,
Fig. 8 einen Schnitt entlang der Linie VIII-VIII der Fig. 6,
Fig. 9 eine Schrägansicht gemäß der in Fig. 6 durch den Pfeil S₉ angedeuteten Sichtrichtung,
Fig. 10 eine vergrößerte Draufsicht auf das Detail Z₁₀ der Fig. 1,
Fig. 11 eine vergrößerte Draufsicht auf das Detail Z₁₁ der Fig. 1,
Fig. 12 einen Schnitt entlang der Linie XII-XII der Fig. 11,
Fig. 13 einen Schnitt entlang der Linie XIII-XIII der Fig. 11 und
Fig. 14 einen Schnitt entlang der Linie XIV-XIV der Fig. 11.

Gemäß der Erfindung ausgeführte Fahrzeugreifen sind Reifen für Kraftfahrzeuge, insbesondere für mehrspurige Kraftfahrzeuge, bevorzugt für Personenkraftwagen (PKWs), Vans (Transporter), SUVs oder Nutzfahrzeuge, insbesondere LKWs, sowie vorzugsweise Fahrzeugluftreifen, besonders bevorzugt Fahrzeugluftreifen in Radialbauart.

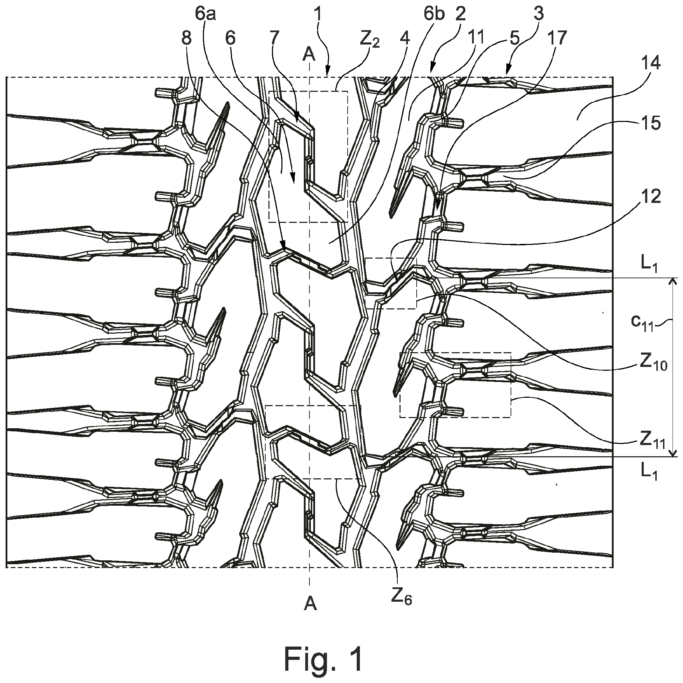

Fig. 1 zeigt eine Draufsicht auf einen vereinfachten Umfangsabschnitt eines in die Ebene abgewickelten Laufstreifens eines Fahrzeugreifens. Die Reifenäquatorialebene ist durch eine Linie A-A gekennzeichnet.

Der Laufstreifen weist eine von der Reifenäquatorialebene (Linie A-A) geschnittene, zentrale Profilblockreihe 1 und in jeder Laufstreifenhälfte je eine halbmittige Profilblockreihe 2 sowie eine schulterseitige Profilblockreihe 3 auf. Der Laufstreifen 1 ist unter Vernachlässigung seiner Verpitchung bezüglich der Reifenäquatorialebene (Linie A-A) drehsymmetrisch ausgeführt, sodass die eine Laufstreifenhälfte durch eine 180°-Drehung um eine in der Reifenäquatorialebene (Linie A-A) liegende, in radialer Richtung verlaufende Drehachse auf die andere Laufstreifenhälfte abbildbar ist.

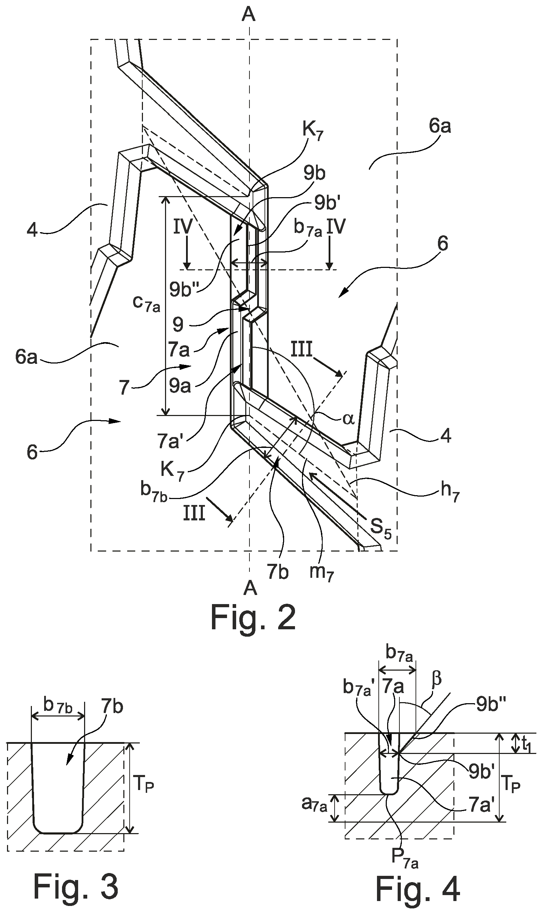

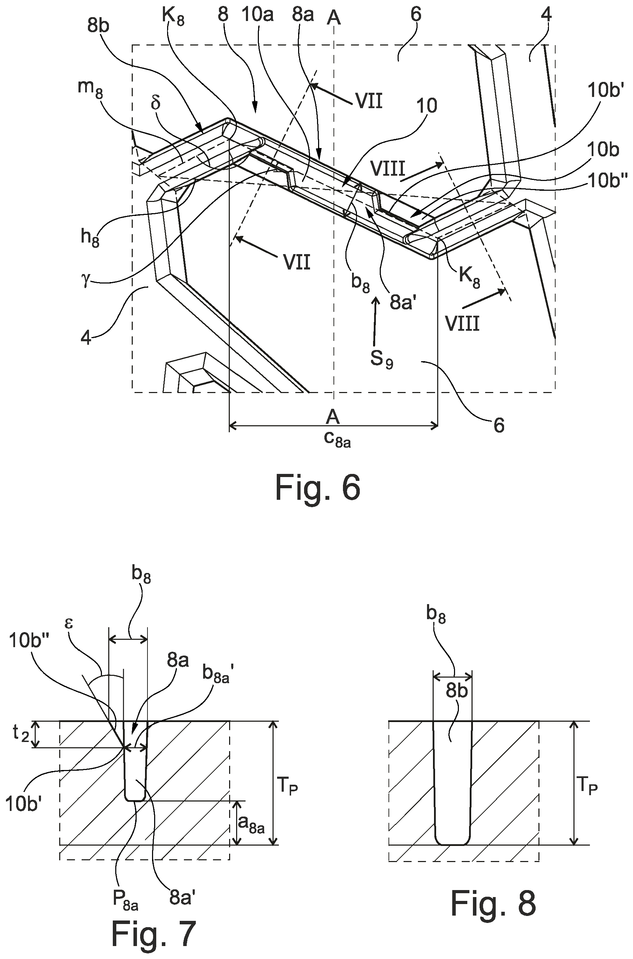

Die zentrale Profilblockreihe 1 ist von jeder halbmittigen Profilblockreihe 2 durch je eine mittlere Umfangsrille 4 und jede halbmittige Profilblockreihe 2 ist zur jeweils benachbarten schulterseitigen Profillockreihe 3 durch eine schulterseitige Umfangsrille 5 getrennt. Die Umfangsrillen 4, 5 sind in radialer Richtung auf die jeweils vorgesehene Profiltiefe T_{P} (Fig. 3, Fig. 7) von insbesondere 7,5 mm bis 14,0 mm ausgeführt.

### 1. Zur zentralen Profilblockreihe 1

Die zentrale Profilblockreihe 1 weist in Umfangsrichtung aufeinanderfolgende, zentrale Profilblöcke 6 auf, welche bei in Draufsicht in vertikaler Richtung verlaufender Reifenäquatorialebene (Linie A-A) eine in Umfangsrichtung langgestreckte L-förmige Gestalt mit einem in Umfangsrichtung orientierten L-Balken und einem in axialer Richtung orientierten L-Balken aufweisen, wobei in Umfangsrichtung einander unmittelbar aufeinanderfolgende, zentrale Profilblöcke 6 bezüglich ihrer L-förmigen Gestalt um 180° verdreht zueinander orientiert sind und im Bereich ihrer in Umfangsrichtung orientierten L-Balken in axialer Richtung überlappen, wie noch genauer ausgeführt wird. Die zentralen Profilblöcke 6 sind durch in beide mittlere Umfangsrillen 4 einmündende, in Draufsicht langgestreckt Z-artig verlaufende Querrillen 7, 8 mit je einer ihrem Verlauf mittig folgenden Rillenmittellinie m₇ (Fig. 2, Querrille 7), m₈ (Fig. 6, Querrille 8) mit zwei Knickpunkten K₇ (Fig. 2, Rillenmittellinie m₇), K₈ (Fig. 6, Rillenmittellinie ms) und einer die Enden ihrer Rillenmittellinie m₇, m₈ verbindenden, gerade verlaufenden Hilfslinie h₇, h₈ getrennt, wobei in Umfangsrichtung abwechselnd eine Querrille 7 auf eine Querrille 8 folgt. Gemäß Fig. 2 ist jede Querrille 7 bezüglich ihrer Hilfslinie h₇ zur axialen Richtung und zur Umfangsrichtung geneigt. Wie ein Vergleich von Fig. 2 mit Fig. 6 zeigt, ist jede Querrille 8 (Fig. 6) - bezogen auf die Hilfslinien h₇, h₈ - stärker zur Umfangsrichtung geneigt als die Querrille 7 (Fig. 2). Gemäß Fig. 1 trennen die Querrillen 8 zentrale Profilblöcke 6 somit im Bereich zwischen den einander zugewandten L-Querbalken. Die Querrillen 7 trennen zentrale Profilblöcke 6, im Bereich ihrer in Umfangsrichtung orientierten, einander in axialer Richtung überlappenden L-Balken.

Die weitere Ausgestaltung der Querrillen 7, 8 wird nachfolgend jeweils anhand einer einzelnen Querrille 7, 8 erläutert und bezieht sich - sofern nicht anders angegeben - auf die Draufsicht.

Gemäß Fig. 2 bzw. Fig. 6 verläuft die Querrille 7 (Fig. 2), 8 (Fig. 6) langgestreckt Z-artig, ist bezüglich der Reifenäquatorialebene (Linie A-A) drehsymmetrisch ausgeführt und setzt sich aus einem gerade verlaufenden, mittleren Rillenabschnitt 7a (Querrille 7), 8a (Querrille 8) und zwei in die verschiedenen, mittleren Umfangsrillen 4 einmündenden, gerade verlaufenden, randseitigen Rillenabschnitten 7b (Querrille 7), 8b (Querrille 8) zusammen.

Gemäß Fig. 2 verläuft der mittlere Rillenabschnitt 7a bezüglich der Rillenmittellinie m₇ in Umfangsrichtung sowie entlang der Reifenäquatorialebene (Linie A-A), schließt mit jedem randseitigen Rillenabschnitten 7b - bezogen auf die Rillenmittellinie m₇ - einen Winkel α von 115° bis 140° ein und weist an der Laufstreifenperipherie eine senkrecht zur Rillenmittellinie m₇ ermittelte, konstante Breite b₇ₐ von 4,0 mm bis 7,0 mm sowie ferner eine auf die Rillenmittellinie m₇ sowie die Knickpunkte K₇ bezogene, in die Umfangsrichtung projizierte Länge c₇ₐ von 250% bis 650%, insbesondere von 350% bis 550%, seiner Breite b₇ₐ auf. Jeder randseitige Rillenabschnitt 7b ist auf die Profiltiefe T_{P} (Fig. 3) ausgeführt und weist an der Laufstreifenperipherie eine senkrecht zur Rillenmittellinie m₇ ermittelte Breite b_{7b} auf, welche sich ausgehend vom mittleren Rillenabschnitt 7a in Richtung zur jeweiligen mittleren Umfangsrille 4 auf lineare Weise vergrößert.

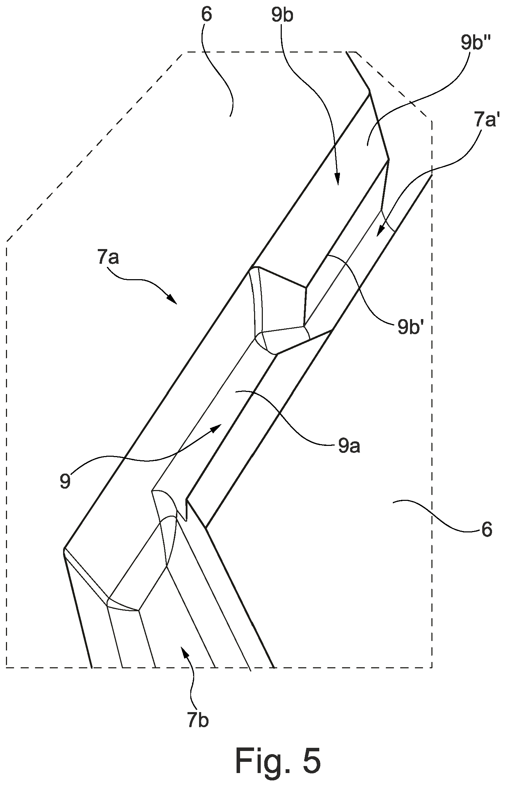

Wie Fig. 2 iVm Fig. 5 zeigt, ist im mittleren Rillenabschnitt 7a eine lokale Grundanhebung 9 ausgebildet, welche aus einer die zentralen Profilblöcke 6 aneinander anbindenden Anhebungsbasis 9a und zwei auf dieser befindlichen Anhebungsvorsprüngen 9b gebildet ist, wobei der eine Anhebungsvorsprung 9b von dem einen zentralen Profilblock 6 und der andere Anhebungsvorsprung 9b von dem anderen zentralen Profilblock 6 vorspringt, die Anhebungsvorsprünge 9b einander bezüglich der senkrecht zur Rillenmittellinie m₇ im Bereich des mittleren Rillenabschnitts 7a verlaufenden Richtung, also bezüglich der axialer Richtung, nicht überlappen und eine auf der Anhebungsbasis 9a verlaufende Abschnittsverengung 7a' des Rillenabschnitts 7a verbleibt. Jeder Anhebungsvorsprung 9b ist in radialer Richtung durch eine von der Laufstreifenperipherie ausgehenden, in Draufsicht trapezförmigen Deckfläche 9b" mit einer am jeweiligen zentralen Profilblock 6 liegenden Trapezbasis begrenzt, wobei die Deckfläche 9b", im in Draufsicht senkrecht zur Rillenmittelline m₇ ausgerichteten Querschnitt betrachtet, zur radialen Richtung unter einem Winkel β (Fig. 4, vergl. Lage der Linie IV-IV in Fig. 2) von 30° bis 55° verläuft, ausgehend vom entsprechenden zentralen Profilblock 6, also ausgehend von ihrer Trapezbasis, in Richtung radial nach innen abfällt, und eine in Draufsicht gerade und parallel Rillenmittelline m₇ verlaufende, die kürzere Grundseite des Trapezes bildende Vorsprungkante 9b' aufweist, die in einer in radialer Richtung ermittelten konstanten Tiefe t₁ (Fig. 4) von 2,0 mm bis 3,0 mm verläuft. Die Abschnittsverengung 7a' weist - wie Fig. 2 iVm Fig. 4 zeigt - eine in Draufsicht senkrecht zur Rillenmittellinie m₇ gemessene (Fig. 2), auf die Vorsprungkante 9b' bezogene (Fig. 4), in der Tiefe t₁ (Fig. 4) der Vorsprungkante 9b' ermittelte Breite b₇ₐ' (Fig. 4) von 40% bis 60% der Breite b₇ₐ (Fig. 4) des mittleren Rillenabschnitts 7a sowie, im in Draufsicht senkrecht zur Rillenmittellinie m₇ verlaufenden Querschnitt betrachtet (vergl. Lage der Linie IV-IV in Fig. 2), zum Niveau der Profiltiefe T_{P} einen auf ihren in radialer Richtung tiefsten Punkt P₇ₐ (Fig. 4) bezogenen, in radialer Richtung ermittelten Abstand a₇ₐ (Fig. 4) von 3,5 mm bis 5,5 mm auf.

Gemäß Fig. 6 bis Fig. 8 weist die Querrille 8, in Draufsicht betrachtet, eine an der Laufstreifenperipherie senkrecht zur Rillenmittellinie m₈ ermittelte, konstante Breite b₈ von 3,0 mm bis 6,0 mm auf. Wie Fig. 6 zeigt, verläuft der mittlere Rillenabschnitt 8a, in Draufsicht betrachtet, bezüglich der Rillenmittellinie m₈ zur axialen Richtung unter einem Winkel γ von 20° bis 30°, wobei der mittlere Rillenabschnitt 8a die Reifenäquatorialebene (Linie A-A) kreuzt und mit jedem randseitigen Rillenabschnitt 8b - bezogen auf die Rillenmittellinie m₈ - einen Winkel δ von 120° bis 145° einschließt und eine auf die Rillenmittellinie m₈ sowie die Knickpunkte K₈ bezogene, in die axiale Richtung projizierte Länge c₈ₐ von 300% bis 700%, insbesondere von 450% bis 600%, seiner Breite b₈ aufweist. Jeder randseitige Rillenabschnitt 8b ist auf die Profiltiefe T_{P} (Fig. 8) ausgeführt.

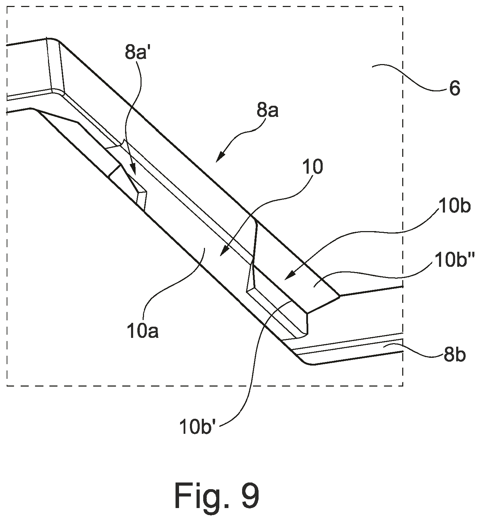

Wie Fig. 6 iVm Fig. 9 zeigt, ist im mittleren Rillenabschnitt 8a eine lokale Grundanhebung 10 ausgebildet, welche aus einer die zentralen Profilblöcke 6 aneinander anbindenden, radial inneren Anhebungsbasis 10a und zwei auf dieser befindlichen Anhebungsvorsprüngen 10b gebildet ist, wobei der eine Anhebungsvorsprung 10b von dem einen zentralen Profilblock 6 und der andere Anhebungsvorsprung 10b von dem anderen zentralen Profilblock 6 vorspringt, die Anhebungsvorsprünge 10b einander bezüglich der senkrecht zur Rillenmittellinie m₈ im Bereich des mittleren Rillenabschnitts 8a verlaufenden Richtung nicht überlappen und eine auf der Anhebungsbasis 10a verlaufende Abschnittsverengung 8a' des Rillenabschnitts 8a verbleibt. Jeder Anhebungsvorsprung 10b ist in radialer Richtung durch eine von der Laufstreifenperipherie ausgehenden, in Draufsicht trapezförmigen Deckfläche 10b" mit einer am jeweiligen zentralen Profilblock 6 liegenden Trapezbasis begrenzt, wobei die Deckfläche 10b", im in Draufsicht senkrecht zur Rillenmittelline m₈ ausgerichteten Querschnitt betrachtet, zur radialen Richtung unter einem Winkel ε (Fig. 7, vergl. Lage der Linie VII-VII in Fig. 6) von 25° bis 45° verläuft, ausgehend vom entsprechenden zentralen Profilblock 6, also ausgehend von ihrer Trapezbasis, in Richtung radial nach innen abfällt, und eine in Draufsicht gerade und parallel Rillenmittelline m₈ verlaufende, die kürzere Grundseite des Trapezes bildende Vorsprungkante 10b' aufweist, die in einer in radialer Richtung ermittelten konstanten Tiefe t₂ (Fig. 7) von 2,0 mm bis 3,0 mm verläuft. Die Abschnittsverengung 8a' weist - wie Fig. 6 iVm Fig. 7 zeigt - eine in Draufsicht senkrecht zur Rillenmittellinie m₈ ermittelte, auf die Vorsprungkante 10b' bezogene, in der Tiefe t₂ der Vorsprungkante 10b' ermittelte Breite b₈ₐ' (Fig. 4) von 40% bis 60% der Breite b₈ der Querrille 8 sowie, im in Draufsicht senkrecht zur Rillenmittellinie m₈ verlaufenden Querschnitt betrachtet (vergl. Lage der Linie VII-VII in Fig. 6), zum Niveau der Profiltiefe T_{P} einen auf ihren in radialer Richtung tiefsten Punkt P₈ₐ (Fig. 7) bezogenen, in radialer Richtung ermittelten Abstand a₈ₐ (Fig. 7) von 3,5 mm bis 5,5 mm auf.

Wie Fig. 1 zeigt, verleiht die erläuterte Ausgestaltung der Querrillen 7, 8 den zentralen Profilblöcken 6, in Draufsicht betrachtet, die bereits erwähnte L-förmige Gestalt, wobei jeder zentrale Profilblock 6 durch die Reifenäquatorialebene (Linie A-A) in einen in der einen Laufstreifenhälfte liegenden, in Umfangsrichtung langestreckten, großvolumigen Blockabschnitt 6a und einen in der anderen Laufstreifenhälfte liegenden, kleinvolumigen Blockabschnitt 6b mit einem gegenüber dem großvolumigen Blockabschnitt 6a kleineren Gummivolumen "geteilt" ist. Entsprechend der erwähnten Orientierung der zentralen Profilblöcke 6 überlappen die großvolumigen Blockabschnitte 6a einander bezüglich der axialen Richtung in einem von der Länge c₇ₐ des mittleren Rillenabschnitts 7a mitbestimmten Ausmaß (vergl. Fig. 2).

### 2. Zu den halbmittigen Profilblockreihen 2

Gemäß Fig. 1 weist jede halbmittige Profilblockreihe 2 in Umfangsrichtung aufeinanderfolgende, halbmittige Profilblöcke 11 auf, welche durch in die angrenzenden Umfangsrillen 4, 5 einmündende, parallel zueinander ausgerichtete Querrillen 12 getrennt, in Draufsicht in Umfangsrichtung langgestreckt sind und eine an der Laufstreifenperipherie ermittelte, in die Umfangsrichtung projizierte Länge c₁₁ aufweisen, welche zwischen zwei durch die in Umfangsrichtung am weitesten voneinander beabstandeten Stellen eines Profilblocks 11 an der Laufstreifenperipherie sowie in axialer Richtung verlaufenden Begrenzungslinien L₁ ermittelt ist und 70,0 mm bis 110,0 mm, insbesondere 75,0 mm bis 105,0 mm, beträgt. Die Länge c₁₁ der halbmittigen Profilblöcke 11 ist dabei derart, dass jedem halbmittigen Profilblock 11 aus der einen halbmittigen Profilblockreihe 2 gemeinsam mit einem halbmittigen Profilblock 11 aus der jeweils anderen halbmittigen Profilblockreihe 2 in axialer Richtung zwei in Umfangsrichtung aufeinanderfolgende, durch eine Querrille 7 getrennte, zentrale Profilblöcke 6 zugeordnet sind.

Die weitere Ausgestaltung der Querrillen 12 wird nachfolgend anhand einer einzelnen Querrille 12 erläutert und bezieht sich - sofern nicht anders angegeben - auf die Draufsicht.

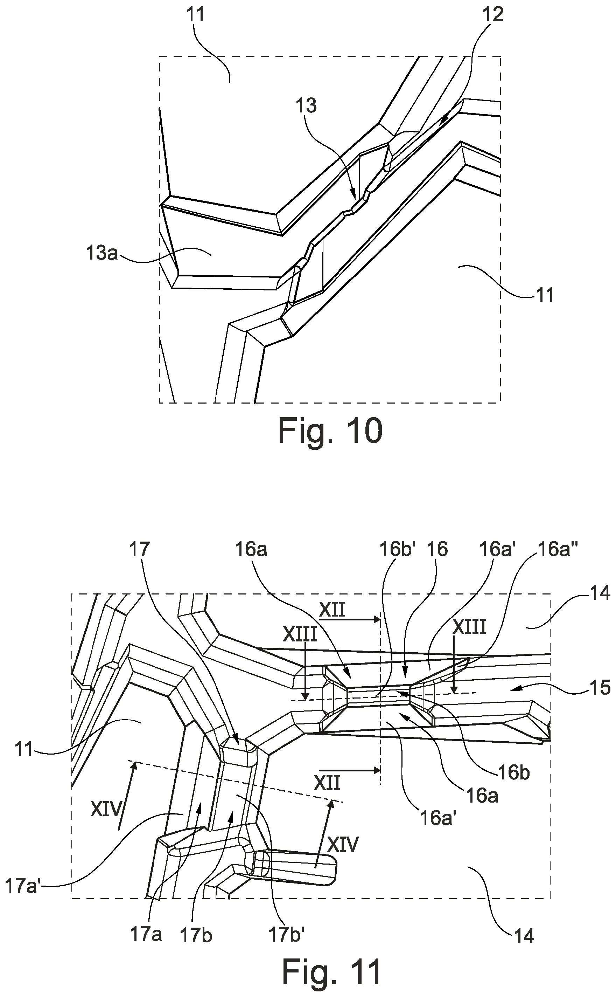

Wie Fig. 10 zeigt, ist in der Querrille 12 eine die angrenzenden, halbmittigen Profilblöcke 11 aneinander anbindende, Grundanhebung 13 ausgebildet, deren exakte Form nicht Gegenstand der Erfindung ist. Die Grundanhebung 13 ist in radialer Richtung durch eine Deckfläche 13a begrenzt und weist eine auf das Niveau der Profiltiefe T_{P} (Fig. 3, Fig. 4, Fig. 7, Fig. 8) bezogene, in radialer Richtung ermittelte, maximale Höhe (Höhe an der höchsten Stelle, in den Figuren nicht vermerkt) von 25% bis 75%, insbesondere von 30% bis 60%, der Profiltiefe T_{P} auf.

### 3. Zur schulterseitigen Profilblockreihe 3

Gemäß Fig. 1 weist jede schulterseitig Profilblockreihe 3 in Umfangsrichtung aufeinanderfolgende, schulterseitige Profilblöcke 14 auf, welche durch in die angrenzenden schulterseitige Umfangsrille 5 einmündende, parallel zueinander ausgerichtete Querrillen 15 getrennt sind. Jedem halbmittigen Profilblock 11 sind zwei schulterseitige Profilblöcke 14 zugeordnet. Pro halbmittigen Profilblock 11 sind daher zwei schulterseitige Profilblöcke 14 vorgesehen.

Die weitere Ausgestaltung der schulterseitigen Querrillen 15 wird nachfolgend anhand einer einzelnen Querrille 15 erläutert und bezieht sich - sofern nicht anders angegeben - auf die Draufsicht.

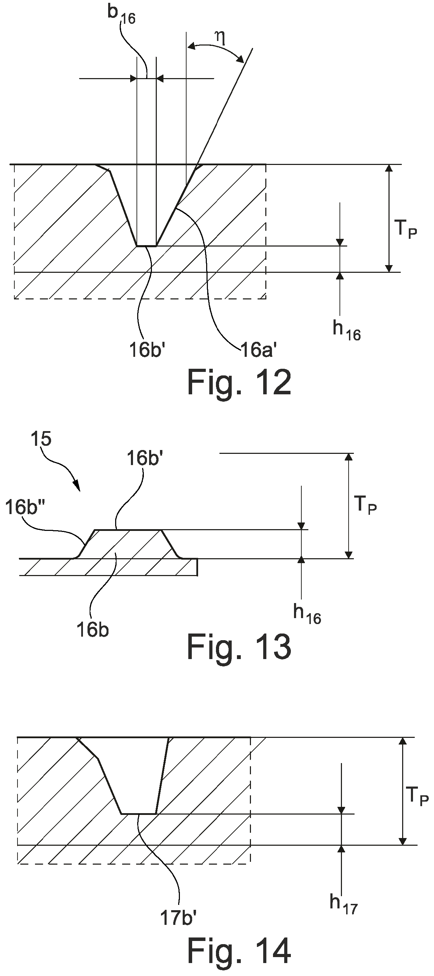

Wie Fig. 11 zeigt, ist in der Querrille 15 eine die angrenzenden schulterseitigen Profilblöcke 14 aneinander anbindende, lokale Grundanhebung 16 ausgebildet, welche sich - in Draufsicht sowie quer zur Längserstreckungsrichtung der Querrille 15 betrachtet - aus zwei an den Profilblöcken 14 angrenzenden, abgeschrägten, randseitigen Anhebungsteilen 16a und einem diese verbindenden, mittigen Anhebungsteil 16b zusammengesetzt ist. Gemäß Fig. 13 weist der mittige Anhebungsteil 16b, im Längsschnitt der Querrille 15 betrachtet (vergl. Lage der Linie XIII-XIII in Fig. 11), die Form eines gleichschenkeligen Trapezes mit einer am Rillengrund der Querrille 15 liegenden Trapezbasis auf, wobei der mittige Anhebungsteil 16b durch eine die kürzere Grundseite des Trapezes bildende, parallel zur Laufstreifenperipherie verlaufende Deckfläche 16b' und zwei je einen Trapezschenkel bildende Seitenflächen 16b" begrenzt ist und - jeweils bezogen auf die Deckfläche 16b' - eine in radialer Richtung ermittelte, konstante Höhe h₁₆ (vergl. Fig. 12) von 3,0 mm bis 4,0 mm sowie eine in Draufsicht senkrecht zur Erstreckungsrichtung der Querrille 15 ermittelte, konstante Breite b₁₆ (Fig. 12) von 1,5 mm bis 2,5 mm aufweist. Wie Fig. 11 ferner zeigt, überragen die randseitigen Anhebungsteile 16a, in Draufsicht betrachtet, die Deckfläche 16b' des mittigen Anhebungsteils 16b in Längserstreckungsrichtung der Querrille 15 beidseitig und sind jeweils durch eine in Draufsicht trapezförmige Deckfläche 16a' und zwei Seitenflächen 16a" begrenzt, wobei die kürzere Grundseite des Trapezes der Deckfläche 16a' an der Deckfläche 16b' des mittigen Anhebungsteils 16b liegt und die Deckfläche 16a', im in Draufsicht senkrecht zur Erstreckungsrichtung der Querrille 15 ausgerichteten Querschnitt betrachtet, zur radialen Richtung unter einem Winkel η (Fig. 12) von 15° bis 35° verläuft.

### 4. Zu einer Grundanhebung 17

Wie Fig. 1 ferner zeigt, ist jeder halbmittige Profilblock 11 an die jeweils zugeordneten, zwei schulterseitigen Profilblöcken 14 mit je einer in der schulterseitigen Umfangsrille 5 ausgebildeten, lokalen Grundanhebung 17 angebunden.

Die weitere Ausgestaltung der Grundanhebungen 17 wird nachfolgend anhand einer einzelnen Grundanhebung 17 erläutert.

Gemäß Fig. 11 ist die Grundanhebung 17, in Draufsicht betrachtet, aus einem am halbmittigen Profilblock 11 angrenzenden, doppelt abgeschrägten Anhebungsteil 17a und einem am schulterseitigen Profilblock 14 angrenzenden Anhebungsteil 17b gebildet. Der Anhebungsteil 17b weist, im Längsschnitt betrachtet, die Form eines Trapezes mit einer am Rillengrund der Umfangsrille 5 liegenden Trapezbasis auf und ist durch eine die kurze Grundseite des Trapezes bildende Deckfläche 17b' begrenzt, welche gemäß Fig. 14 parallel zur Laufstreifenperipherie verläuft. Wie Fig. 14 ferner zeigt, weist der Anhebungsteil 17b (Fig. 11) eine auf die Deckfläche 17b' bezogene, gegenüber dem Niveau der Profiltiefe T_{P} in radialer Richtung ermittele Höhe h₁₇ von 2,0 mm bis 5,0 mm auf. Gemäß Fig. 11 ist der abgeschrägte Anhebungsteil 17a durch eine vom Niveau der Laufstreifenperipherie ausgehende, an die Deckfläche 17b' des Anhebungsteils 17 anschließende, zweiteilige Deckfläche 17a' begrenzt.

### 5. Zu mit den Grundanhebungen 9, 10 13, 16, 17 einhergehenden Rillenverengungen

Die Grundanhebungen 9, 10, 13, 16, 17 reichen zumindest bereichsweise nicht bis zur Laufstreifenperipherie, sondern sind zumindest lokal gegenüber dieser in radialer Richtung abgesetzt ausgebildet, sodass von den Querrillen 7, 8, 12, 15 und den schulterseitigen Umfangsrillen 5 im Bereich der Grundanhebung 9, 10, 13, 16, 17 jeweils eine sich über die komplette Grundanhebung 9, 10, 13, 16, 17 erstreckende, lokale Rillenverengung verbleibt. Beim Ausführungsbeispiel bildet die Abschnittsverengung 7a' die im Bereich der Grundanhebung 9 verbleibende lokale Rillenverengung.

### 6. Zu weiteren Ausführungen

Die Erfindung ist auf das beschriebene Ausführungsbeispiel nicht beschränkt.

Insbesondere kann die Form der lokalen Grundanhebungen sowie die Ausgestaltung der Querrillen und damit die Form der Profilblöcke vom Ausführungsbeispiel abweichen. Die Grundanhebungen reichen an ihren gegenüber dem Niveau der Profiltiefe in radialer Richtung ermittelten höchsten Stelle in eine Höhe von zumindest 2,5 mm.

### Bezugszeichenliste

- 1: zentrale Profilblockreihe
- 2: halbmittige Profilblockreihe
- 3: schulterseitige Profilblockreihe
- 4: mittlere Umfangsrille
- 5: schulterseitige Umfangsrille
- 6: zentraler Profilblock
- 6a: großvolumiger Blockabschnitt
- 6b: kleinvolumiger Blockabschnitt
- 7: Querrille
- 7a: mittlerer Rillenabschnitt
- 7a': Abschnittsverengung
- 7b: randseitiger Rillenabschnitt
- 8: Querrille
- 8a: mittlerer Rillenabschnitt
- 8a': Abschnittsverengung
- 8b: randseitiger Rillenabschnitt
- 9: Grundanhebung
- 9a: Anhebungsbasis
- 9b: Anhebungsvorsprung
- 9b': Vorsprungkante
- 9b": Deckfläche
- 10: Grundanhebung
- 10a: Anhebungsbasis
- 10b: Anhebungsvorsprung
- 10b': Vorsprungkante
- 10b": Deckfläche
- 11: halbmittiger Profilblock
- 12: Querrille
- 13: Grundanhebung
- 13a: Deckfläche
- 14: schulterseitiger Profilblock
- 15: Querrille
- 16: Grundanhebung
- 16a: randseitiger Anhebungsteil
- 16a': Deckfläche
- 16a": Seitenfläche
- 16b: mittiger Anhebungsteil
- 16b': Deckfläche
- 16b": Seitenfläche
- 17: Grundanhebung
- 17a: Anhebungsteil
- 17a': Deckfläche
- 17b: Anhebungsteil
- 17b': Deckfläche
- A-A: Linie (Reifenäquatorialebene)
- a₇ₐ, a₈ₐ: Abstand
- b₇ₐ, b_{7b}, b₇ₐ': Breite
- b₈, b₈ₐ', b₁₆: Breite
- c₇ₐ, c₈ₐ, c₁₁: Länge
- h₇, h₈: Hilfslinie
- h₁₆, h₁₇: Höhe
- K₇, K₈: Knickpunkt
- L₁: Begrenzungslinie
- m₇, m₈: Rillenmittellinie
- P₇ₐ, P₈ₐ: tiefster Punkt
- t₁, t₂: Tiefe
- S₅, S₉ Pfeil: (Sichtrichtung)
- T_{P}: Profiltiefe
- Z₂, Z₆, Z₁₀, Z₁₁: Detail
- α, β, γ, δ, ε, η: Winkel

## Patentansprüche

1. Fahrzeugreifen mit einem Lauftreifen mit genau fünf, von auf Profiltiefe (T_{P}) ausgeführten mittleren und schulterseitigen Umfangsrillen (4, 5) voneinander getrennten Profilblockreihen (1, 2, 3), zu welchen eine von der Reifenäquatorialebene (Linie A-A) geschnittene, zentrale Profilblockreihe (1), zwei halbmittige Profilblockreihen (2) und zwei schulterseitige Profilblockreihe (3) gehören, wobei die Profilblockreihen (1, 2, 3) durch Querrillen (7, 8, 12, 15) voneinander getrennte, in Umfangsrichtung aufeinanderfolgende, zentrale Profilblöcke (6), halbmittige Profilblöcke (11) und schulterseitige Profilblöcke (14) aufweisen und wobei die in Umfangsrichtung aufeinanderfolgenden, zentralen Profilblöcke (6) und die in Umfangsrichtung aufeinanderfolgenden, halbmittigen Profilblöcke (11) jeweils durch eine in der jeweiligen Querrille (7, 8, 12) ausgebildete, dieser eine lokale Rillenverengung (7a') verleihende Grundanhebung (9, 10) miteinander verbunden sind und wobei jedem halbmittigen Profilblock (11) in axialer Richtung zwei schulterseitige Profilblöcke (14) der benachbarten schulterseitigen Profilblockreihe (3) zugeordnet sind,
**dadurch gekennzeichnet,**
**dass** jedem halbmittigen Profilblock (11) aus der einen halbmittigen Profilblockreihe (2) gemeinsam mit einem halbmittigen Profilblock (11) aus der jeweils anderen halbmittigen Profilblockreihe (2) in axialer Richtung zwei zentrale Profilblöcke (6) zugeordnet sind,
wobei die halbmittigen Profilblöcke (11) jeweils über zwei in der angrenzenden, schulterseitigen Umfangsrille (5) befindliche, dieser lokale Rillenverengungen verleihenden Grundanhebungen (17) mit den in axialer Richtung zugeordneten, schulterseitigen Profilblöcken (14) verbunden sind und
wobei einander in Umfangsrichtung aufeinanderfolgende, schulterseitige Profilblöcke (14) mit je einer in der diese trennenden Querrille (15) eine lokale Rillenverengung verleihenden Grundanhebung (13) verbunden sind,
wobei sämtliche lokale Grundanhebungen (9, 10, 13, 17) an ihrer gegenüber dem Niveau der Profiltiefe (T_{P}) in radialer Richtung ermittelten höchsten Stelle eine Höhe von zumindest 2,5 mm aufweisen.

2. Fahrzeugreifen nach Anspruch 1, **dadurch gekennzeichnet, dass** die mittleren Umfangsrillen (4) frei von lokalen Grundanhebungen sind, welche zentrale Profilblöcke (6) an halbmittige Profilblöcke (11) anbinden.

3. Fahrzeugreifen nach Anspruch 1 oder 2, **dadurch gekennzeichnet, dass** die halbmittigen Profilblöcke (11), in Draufsicht betrachtet, in Umfangsrichtung langgestreckt sind und eine an der Laufstreifenperipherie ermittelte, in die Umfangsrichtung projizierte Länge (c₁₁) aufweisen, welche zwischen zwei Begrenzungslinien (L₁) ermittelt ist, die in axialer Richtung durch die in Umfangsrichtung am weitesten voneinander beabstandeten Stellen des jeweiligen halbmittigen Profilblocks (11) an der Laufstreifenperipherie verlaufen, und welche 70,0 mm bis 110,0 mm, insbesondere 75,0 mm bis 105,0 mm, beträgt.

4. Fahrzeugreifen nach einem der Ansprüche 1 bis 3, **dadurch gekennzeichnet, dass** die Querrillen (7, 8) in der zentralen Profilblockreihe (1) - bezogen auf in Draufsicht gerade verlaufende, die Enden der jeweiligen Rillenmittellinie (m₇, m₈) verbindende Hilfslinien (h₇, h₈) - zur Umfangsrichtung geneigte, erste Querrillen (7) und gegenüber diesen stärker zur Umfangsrichtung geneigte, zweite Querrillen (8) sind, wobei in Umfangsrichtung abwechselnd eine der ersten Querrillen (7) auf eine der zweiten Querrillen (8) folgt, wobei die zentralen Profilblöcke (6), in Draufsicht betrachtet, jeweils eine L-förmige Gestalt aufweisen und durch die Reifenäquatorialebene (Linie A-A) in einen in der einen Laufstreifenhälfte liegenden, in Umfangsrichtung langestreckten, großvolumigen Blockabschnitt (6a) und einen in der anderen Laufstreifenhälfte liegenden, kleinvolumigen Blockabschnitt (6b) mit einem gegenüber dem großvolumigen Blockabschnitt (6a) kleineren Gummivolumen geteilt sind, wobei in Umfangsrichtung aufeinanderfolgende zentrale Profilblöcke (6) in Draufsicht derart bezüglich ihrer L-Form um 180° verdreht zueinander orientiert sind, dass die großvolumigen Blockabschnitte (6b) bezüglich der axialen Richtung überlappen.

5. Fahrzeugreifen nach Anspruch 4, **dadurch gekennzeichnet, dass** die ersten Querrillen (7) in der zentralen Profilblockreihe (1), in Draufsicht betrachtet, langgestreckt Z-förmig verlaufen, eine Rillenmittelline (m₇) mit zwei Knickpunkten (K₇) aufweisen und sich aus einem gerade verlaufenden, mittleren Rillenabschnitt (7a) und zwei randseitigen Rillenabschnitten (7b) zusammensetzen, wobei der mittlere Rillenabschnitt (7a) - bezogen auf die Rillenmittellinie (m₇) - zur Umfangsrichtung unter einem Winkel von bis zu 5°, insbesondere 0°, verläuft und mit jedem randseitigen Rillenabschnitt (7b) - bezogen auf die Rillenmittellinie (m₇) - je einen Winkel (α) von 115° bis 140° einschließt, wobei die komplette Grundanhebung (9) - bezüglich der Rillenmittellinie (m₇) - im mittleren Rillenabschnitt (7a) ausgebildet ist.

6. Fahrzeugreifen nach Anspruch 5, **dadurch gekennzeichnet, dass** der mittlere Rillenabschnitt (7a), in Draufsicht betrachtet, in Umfangsrichtung sowie im Bereich der Reifenäquatorialebene (Linie A-A) verläuft.

7. Fahrzeugreifen nach Anspruch 5 oder 6, **dadurch gekennzeichnet, dass** der mittlere Rillenabschnitt (7a) an der Laufstreifenperipherie eine in Draufsicht senkrecht zur Rillenmittellinie (m₇) ermittelte, konstante Breite (b₇ₐ) von 4,0 mm bis 7,0 mm sowie ferner eine auf die Knickpunkte (K₇) der Rillenmittellinie (m₇) bezogene, in die Umfangsrichtung projizierte Länge (c₇ₐ) von 250% bis 650%, insbesondere 350% bis 550%, seiner Breite (b₇ₐ) aufweist.

8. Fahrzeugreifen nach einem der Ansprüche 5 bis 7, **dadurch gekennzeichnet, dass** die randseitigen Rillenabschnitte (7b) eine in Draufsicht senkrecht zur Rillenmittellinie (m₇) ermittelte Breite (b_{7b}) aufweisen, welche ausgehend vom mittleren Rillenabschnitt (7a) zu den mittleren Umfangsrillen (4) fortlaufend und stetig, insbesondere auf lineare Weise, zunimmt.

9. Fahrzeugreifen nach einem der Ansprüche 5 bis 8, **dadurch gekennzeichnet, dass** die Grundanhebungen (9), welche im mittleren Rillenabschnitt (7a) der ersten Querrillen (7) ausgebildet sind, jeweils aus einer die zentralen Profilblöcke (6) aneinander anbindenden Anhebungsbasis (9a) und zwei auf dieser befindlichen Anhebungsvorsprüngen (9b) gebildet sind, wobei der eine Anhebungsvorsprung (9b) von dem einen zentralen Profilblock (6) und der andere Anhebungsvorsprung (9b) von dem anderen zentralen Profilblock (6) vorspringt, wobei die Anhebungsvorsprünge (9b), in Draufsicht betrachtet, bezüglich jener Richtung, welche senkrecht zur Rillenmittellinie (m₇) im Bereich des mittleren Rillenabschnitts (7a) verläuft, überlappungsfrei ausgebildet sind.

10. Fahrzeugreifen nach einem der Ansprüche 4 bis 9, **dadurch gekennzeichnet, dass** die zweiten Querrillen (8) in der zentralen Profilblockreihe (1), in Draufsicht betrachtet, langgestreckt Z-förmig verlaufen, eine Rillenmittelline (m₈) mit zwei Knickpunkten (K₈) aufweisen und sich aus einem gerade verlaufenden, mittleren Rillenabschnitt (8a) und zwei randseitigen Rillenabschnitten (8b) zusammensetzen, wobei der mittlere Rillenabschnitt (8a) - bezogen auf die Rillenmittellinie (m₈) - zur axialen Richtung unter einem Winkel (γ) von 20° bis 30° verläuft und mit jedem randseitigen Rillenabschnitt (8b) - bezogen auf die Rillenmittellinie (m₈) - je einen Winkel (δ) von 120° bis 145° einschließt, wobei die komplette Grundanhebung (10) - bezüglich der Rillenmittellinie (m₈) - im mittleren Rillenabschnitt (8a) ausgebildet ist.

11. Fahrzeugreifen nach Anspruch 10, **dadurch gekennzeichnet, dass** der mittlere Rillenabschnitt (8a), in Draufsicht betrachtet, die Reifenäquatorialebene (Linie A-A) kreuzt.

12. Fahrzeugreifen nach Anspruch 10 oder 11, **dadurch gekennzeichnet, dass** die zweiten Querrillen (8) an der Laufstreifenperipherie eine in Draufsicht senkrecht zur Rillenmittellinie (m₈) ermittelte, konstante Breite (b₈) von 3,0 mm bis 6,0 mm und der mittlere Rillenabschnitt (8a) eine auf die Knickpunkte (K₈) der Rillenmittellinie (m₈) bezogene, in die axiale Richtung projizierte Länge (c₈ₐ) von 300% bis 700%, insbesondere von 450% bis 600%, der Breite (bs) der jeweiligen Querrille (8) aufweist.

13. Fahrzeugreifen nach einem der Ansprüche 10 bis 12, **dadurch gekennzeichnet, dass** die Grundanhebungen (10), welche im mittleren Rillenabschnitt (8a) der zweiten Querrillen (8) ausgebildet sind, jeweils aus einer die zentralen Profilblöcke (6) aneinander anbindenden Anhebungsbasis (10a) und zwei auf dieser befindlichen Anhebungsvorsprüngen (10b) gebildet sind, wobei der eine Anhebungsvorsprung (10b) von dem einen zentralen Profilblock (6) und der andere Anhebungsvorsprung (10b) von dem anderen zentralen Profilblock (6) vorspringt, wobei die Anhebungsvorsprünge (10b), in Draufsicht betrachtet, bezüglich jener Richtung, welche senkrecht zur Rillenmittellinie (m₈) im Bereich des mittleren Rillenabschnitts (8a) verläuft, überlappungsfrei ausgebildet sind.
